Europäisches Patentamt

European Patent Office

Office européen des brevets

(11) Veröffentlichungsnummer : **0 120 451**
**B1**

(12) **EUROPÄISCHE PATENTSCHRIFT**

(45) Veröffentlichungstag der Patentschrift :
10.09.86

(51) Int. Cl.⁴ : **B 23 D 61/02**

(21) Anmeldenummer : 84103102.4

(22) Anmeldetag : 21.03.84

(54) Scheibenförmiges Werkzeug.

(30) Priorität : 23.03.83 DE 3310434

(43) Veröffentlichungstag der Anmeldung :
03.10.84 Patentblatt 84/40

(45) Bekanntmachung des Hinweises auf die Patenterteilung : 10.09.86 Patentblatt 86/37

(84) Benannte Vertragsstaaten :
AT BE CH DE FR GB IT LI NL SE

(56) Entgegenhaltungen :
DE-A- 2 907 923
DE-B- 2 363 656
DE-B- 2 746 192
GB-A- 2 012 390

(73) Patentinhaber : Saljé, Ernst
Schulheide 4
D-2106 Bendestorf (DE)

(72) Erfinder : Saljé, Ernst, Professor Dr.-Ing.
Schulheide 4
D-2106 Bendestorf (DE)
Erfinder : Piester, Jörg, Dipl.-Ing.
Berliner Strasse 18
D-3304 Wendeburg (DE)

(74) Vertreter : Koscholke, Gotthold, Dr.-Ing.
Rheinallee 147
D-4000 Düsseldorf 11 (DE)

## Beschreibung

Die Erfindung bezieht sich auf ein scheibenförmiges, am Umfang mit definierten oder undefinierten Schneiden versehenes Werkzeug, namentlich Kreissäge-Werkzeug, Trennschleifscheibe od. dgl., wobei der Grundkörper oder das Stammblatt des Werkzeuges wenigstens auf einer Seite mit einer schwingungsmindernden Bekleidung versehen ist, die eine Schicht aus viskoelastischem Material und eine Abdeckung auf dieser enthält, wobei für die Abdeckung wenigstens im Bereich ihres äußeren Umfangs eine außenseitige mechanische Halterung vorgesehen ist, der Grundkörper wenigstens in einer Seitenfläche eine durchgehende Nut aufweist und die Abdeckung sich mit einem Teile ihres äußeren Bereichs in die Nut hinein erstreckt.

Bei einem bekannten Kreissäge-Werkzeug (DE-B2-2 746 192) ist bei einer Ausführung ein kreisringförmiger Haltekörper vorhanden, der an seinem äußeren Randbereich auf einer von der Außenseite des Stammblattes oder einem mit dem Stammblatt verbundenen Ring gebildeten festen Auflage befestigt ist. Die Haltekörper sind dabei Folien, z. B. aus Stahl, welche sich über die gesamte Fläche der Abdeckungen erstrecken. Bei einer weiteren Ausführung ist die Abdeckung selbst in der Nähe ihes Außenrandes mit einer Verformungsstelle versehen, die sich in eine Ausnehmung des Stammblattes hinein erstreckt. Am Außenrand ist die Abdeckung am Stammblatt befestigt.

Aufgabe der Erfindung ist es, eine weitere vorteilhafte Lösung für das Problem zu finden, einen sicheren Zusammenhalt des Stammblattes oder Grundkörpers des Werkzeuges mit seiner schwingungsmindernden Bekleidung zu erreichen und die Gefahr einer Trennung von Stammblatt und Abdeckung auszuschließen. Dabei strebt die Erfindung auch eine vorteilhafte Ausbildung des Werkzeuges im einzelnen an.

Die Erfindung sieht bei einem scheibenförmigen Werkzeug der eingangs genannten Art vor, daß wenigstens ein am Grundkörper abgestütztes Halteelement den in die Nut reichenden Randbereich der Abdeckung übergreift.

Damit ist eine einfache und zugleich sehr wirksame Halterung für die Abdeckung geschaffen, die diese in der erforderlichen Lage sichert, in der das Dämpfungsvermögen der Bekleidung mit der viskoelastischen Schicht funktionsfähig ist.

Die Nut kann in ihrem radial außen gelegenen Teil ein hinterschnittenes Querschnittsprofil aufweisen. Dies ist für verschiedene Ausführungen günstig. So kann das Halteelement einmal von dem hinterschnittenen Teil selbst gebildet sein. Die Abdeckung ist dann mit ihrem Randbereich daruntergeschoben oder eingeführt, ggfs. unter vorübergehender elastischer Verformung. Bei einer anderen Ausführung ist das Halteelement zwischen dem das hinterschnittene Querschnittsprofil aufweisenden Teil der Nut und dem Randbereich der Abdeckung vorgesehen. Hierbei kann das Halteelement namentlich die Form einer Einlage oder einer in den vorhandenen Raum eingebrachten Materialfüllung haben, etwa raupen- oder wulstartig, so daß sich eine Verriegelung oder Plombierung ergibt.

Bei einer anderen vorteilhaften Ausführung ist das Halteelement ein am Grundkörper festgelegter Materialstreifen, der sich in radialer Richtung über einen Teil der Nut erstreckt. Dabei überdeckt dieser Materialstreifen den Randbereich der Abdeckung zu dessen Lagesicherung. Er kann unmittelbar im Kontakt mit diesem Randbereich der Abdeckung stehen. Es läßt sich aber auch noch ein Zwischenglied, etwa eine Materialfüllung, insbesondere Dichtungsmaterial od. dgl., vorsehen.

Bei einer weiteren günstigen Ausführung ist das Halteelement ein in der Nut festgelegter Einsatz, der eine den Randbereich der Abdeckung übergreifende Partie aufweist. Letztere kann durch einen Absatz od. dgl. gebildet sein. Insbesondere hat der Einsatz in seinem dem Randbereich der Abdeckung zugewandten Teil eine hinterschnittene Form. Namentlich handelt es sich dabei um eine im Querschnitt geneigte oder schräg verlaufende Begrenzungsfläche, die der Außenseite des Randbereiches der Abdeckung zugewandt ist und unmittelbar oder über ein Zwischenmaterial auf dieser aufliegen kann.

Die Ausführung läßt sich ferner so treffen, daß das Halteelement durch wenigstens einen verformten Bereich der radial außen gelegenen Begrenzung der Nut gebildet ist. Nach dem Auflegen der Abdeckung mit sich in die Nut hinein erstreckendem Randbereich kann dann die Verformung des Materials des Grundkörpers in der entsprechenden Weise erfolgen. Auch bei dieser Ausführung kann eine unmittelbare Berührung vorhanden sein oder ein dazwischenliegendes Material, insbesondere auch ein Dichtungsmaterial.

Ungeachtet der Ausbildung des Halteelements im einzelnen kann sich dasselbe durchgehend über den ganzen Umfang der umlaufenden Nut erstrecken. Die Ausführung läßt sich aber auch so treffen, daß mehrere mit Abstand voneinander über den Umfang der Nut verteilt angeordnete Halteelemente vorhanden sind.

Um das Eindringen von Schmutz oder von Fremdkörpern in die Nut bzw. unter die Abdeckung auszuschließen, ist zweckmäßig auf der Außenseite der Abdeckung eine Dichtung vorgesehen, die sich zumindest über Teile des Umfangs der Nut erstreckt. Die Dichtung kann eine zusätzlich zu dem Halteelement angebrachten Teil bilden. Je nach der Gestaltung des Halteelements kann dieses aber auch zugleich als Dichtung ausgebildet sein bzw. die Funktion einer Dichtung erfüllen.

Weitere Vorteile der Erfindung ergeben sich aus der nachstehenden Erläuterung von in der Zeichnung dargestellten Ausführungsbeispielen, aus der zugehörigen Beschreibung und aus den Ansprüchen. Es zeigen :

Figur 1 ein Kreissäge-Werkzeug gemäß der Erfindung in teils schematischer Seitenansicht, wobei an einer Stelle die Abdeckung aufgebrochen gezeichnet ist,

Figur 2 einen Schnitt nach der Linie II-II in Fig. 1,

Figuren 3, 4 u. 5 weitere Ausführungen des erfindungsgemäßen Werkzeuges jeweils in einem der Fig. 2 entsprechenden Schnitt und

Figur 6 eine Teilansicht eines Werkzeuges.

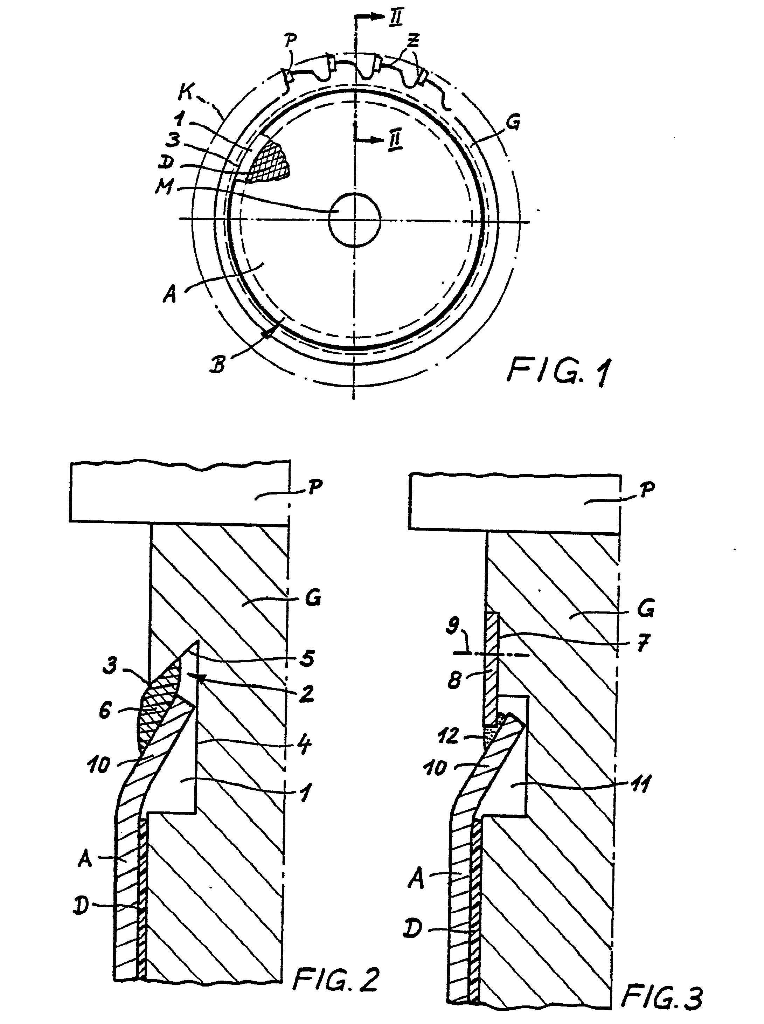

Das in Fig. 1 dargestellte Kreissäge-Werkzeug enthält als Grundkörper ein aus Stahl bestehendes scheibenförmiges Stammblatt G, das an seinem Umfang mit Zähnen Z versehen ist. Es ist jeweils nur ein Teil dieser mit regelmäßigen oder auch mit unregelmäßigen Abständen voneinander über den ganzen Umfang verteilt angeordneten Zähne eingezeichnet, wobei mit der strichpunktierten Linie K der Flugkreis der Zahnspitzen angedeutet ist. Die Zähne Z können mit aufgelöteten Schneidplättchen P aus Hartmetall oder einem anderen Werkstoff versehen sein oder eine sonstige Ausbildung haben, so auch unmittelbar die Schneiden des Werkzeuges bilden. Eine Mittelbohrung ist mit dem Buchstaben M bezeichnet.

Der Grundkörper G des Werkzeuges ist auf beiden Seiten mit einer schwingungsmindernden Bekleidung B versehen, von denen in Fig. 1 nur eine sichtbar ist. Jede dieser Bekleidungen enthält zumindest eine Schicht D aus viskoelastischem Material, namentlich einem Kunstharz mit Klebeeigenschaften, sowie eine Abdeckung A auf der letzteren. Die Abdeckungen können aus Stahl, aus Nichteisenmetallen, Metall-Legierungen, Hartstoffen, aber auch aus Kunststoffen, namentlich solchen mit großer Abriebsfestigkeit, und anderen geeigneten Materialien bestehen. Vorteilhaft sind sie als Folie ausgebildet, z. B. mit einer Dicke von einigen zehntel Millimetern. Im übrigen läßt sich die Dicke der Abdeckung A und der viskoelastischen Schicht D je nach dem Bedarfsfall oder Einsatzzweck wählen.

Für die Abdeckung A ist eine von der viskoelastischen Schicht D unabhängige und dieser ein Dämpfungsvermögen unter Schubbeanspruchung belassende mechanische Halterung derart vorgesehen, daß wenigstens ein am Grundkörper G abgestütztes Halteelement einen Randbereich der Abdeckung A übergreift, der sich in eine Nut 1 des Grundkörpers G hinein erstreckt.

Die Nut 1 befindet sich in der Seitenfläche des Grundkörpers. Sie ist in Umfangsrichtung durchgehend und hat in ihrem Verlauf eine dem Randverlauf der Abdeckung angepaßte Form. Bei kreisförmig begrenzter Abdeckung verläuft die Nut 1 somit ebenfalls kreisförmig. Dies ist in Fig. 1 gezeigt. Hat die Abdeckung eine andere, d. h. von der Kreisform abweichende Randform, so ist der Verlauf der Nut entsprechend angepaßt. Die Tiefe der Nut braucht nur so groß zu sein, daß sie den Randbereich der Abdeckung in der erforderlichen Weise aufnehmen kann. Als vorteilhaftes Beispiel läßt sich eine Dicke der Abdeckung von etwa 0,3 mm und eine Nuttiefe im Bereich von 0,5 bis 0,7 mm nennen.

Bei der in Fig. 2 gezeigten Ausführung hat die Nut 1 in ihrem radial außen gelegenen Teil ein hinterschnittenes Querschnittsprofil 2 mit einer von einer Kante 3 der Nut 1 zu deren Grundfläche 4 hin geneigten Fläche 5, was gewissermaßen die Hälfte einer Schwalbenschwanznut ergibt. Der Randbereich 10 der auf der viskoelastischen Schicht D liegenden Abdeckung A ist in Richtung auf die Nut 1 abgebogen und erstreckt sich in diese hinein. Ausgehend von einer ebenen Ronde od. dgl. kann die Formung des Randbereichs 10 in der dargestellten Weise vor dem Aufbringen der Abdeckung A auf die viskoelastische Schicht D erfolgen, so daß die Abdeckung in vorgeformten Zustand aufgelegt wird. Es ist aber auch möglich, den Randbereich 10 nach dem Aufbringen der Abdeckung in ebener Gestalt in die Nut 1 hineinzudrücken. Beides gilt grundsätzlich für alle Ausführungen des erfindungsgemäßen Werkzeuges.

Bei der Ausführung nach Fig. 2 ist das radiale Außenmaß der Abdeckung A etwas kleiner als der radiale Abstand der Kante 3 der Nut 1 vom Mittelpunkt des Werkzeuges, so daß die Kante des Randbereichs 10 der Abdeckung A bei der Montage frei an der Kante 3 der Nut 1 vorbeigeht. In den Raum zwischen der geneigten Fläche 5 der Nut 1 und der Außenseite des Randbereichs 10 der Abdeckung A ist ein Halteelement 6 eingefügt. Dieses wird hier von einer raupenförmigen Materialfüllung (in der Form etwa einer Schweißraupe vergleichbar) gebildet, die die Abdeckung A ähnlich wie eine Plombe sichert. Für diese Materialfüllung 6 kommen alle Werkstoffe in Betracht, die die Abdeckung halten und an einem Ablösen hindern können, ohne das Dämpfungsvermögen der viskoelastischen Schicht D wesentlich zu beeinträchtigen. Insbesondere seien genannt : gummielastische Klebstoffe, Silikonkautschuk, weiche Metalle, eingepreßtes Weichlot u. dgl. Die art des Einbringens dieser Füllung richtet sich nach dem verwendeten Material. Sie kann z. B. eingedrückt, eingespritzt, eingetrieben oder auf ähnliche Weise eingebracht werden.

Anstelle einer Materialfüllung, wie sie vorstehend erläutert wurde, läßt sich im Zwischenraum zwischen dem hinterschnittenen Nutteil 2 und dem Randbereich 10 der Abdeckung A erfindungsgemäß auch eine andere Art von Halteelementen vorsehen, insbesondere vorgeformte Teile, wie z. B. kissenartige oder keilartige Körper, Kreisringabschnitte od. dgl., jeweils aus geeignetem Werkstoff.

Bei der Ausführung nach Fig. 3 ist im Grundkörper G eine nicht hinterschnittene Nut 11 vorgesehen, in die der abgebogene Randbereich 10 der Abdeckung A hineinragt. In einer sich radial auswärts an die Nut 11 anschließenden flachen ringförmigen Ausnehmung 7 des Grundkörpers G ist ein Materialstreifen in Form eines ein- oder mehrteiligen Ringes 8 aus Stahl oder einem anderen geeigneten Material befestigt, der den Randbereich 10 der Abdeckung A auf dem ganzen Umfang übergreift. Die Dicke des Ringes 8 liegt bei einer zweckmässigen Ausführung im Bereich von 0,2 bis 0,3 mm. Mit der Ziffer 12 ist ein Dichtungsmaterial bezeichnet z. B. ein dauerelastischer oder dauerplastischer Kleber, Kitt od. dgl., der die Nut 11 zusätzlich verschließt und das Eindringen von Schmutz oder Fremdkörpern verhindert. Das Dichtungsmaterial 12 wird zweckmäßig auf die Außenseite des Randbereichs 10 der Abdeckung A aufgetragen, ehe der Ring 8 an seine Stelle gebracht wird. Zwischen dem Ring 8 und dem Randbereich 10 kann vorteilhaft ein geringer Abstand verbleiben, der von dem Dichtungsmaterial 12 dann überbrückt bzw. ausgefüllt wird. Die Befestigung des Ringes 8 am Grundkörper G kann auf jede geeignete Weise erfolgen, z. B. durch Kleben, Löten, Schweißen oder Schrauben. In Fig. 3 ist bei der Ziffer 9 schematisch eine Schraubenverbindung angedeutet.

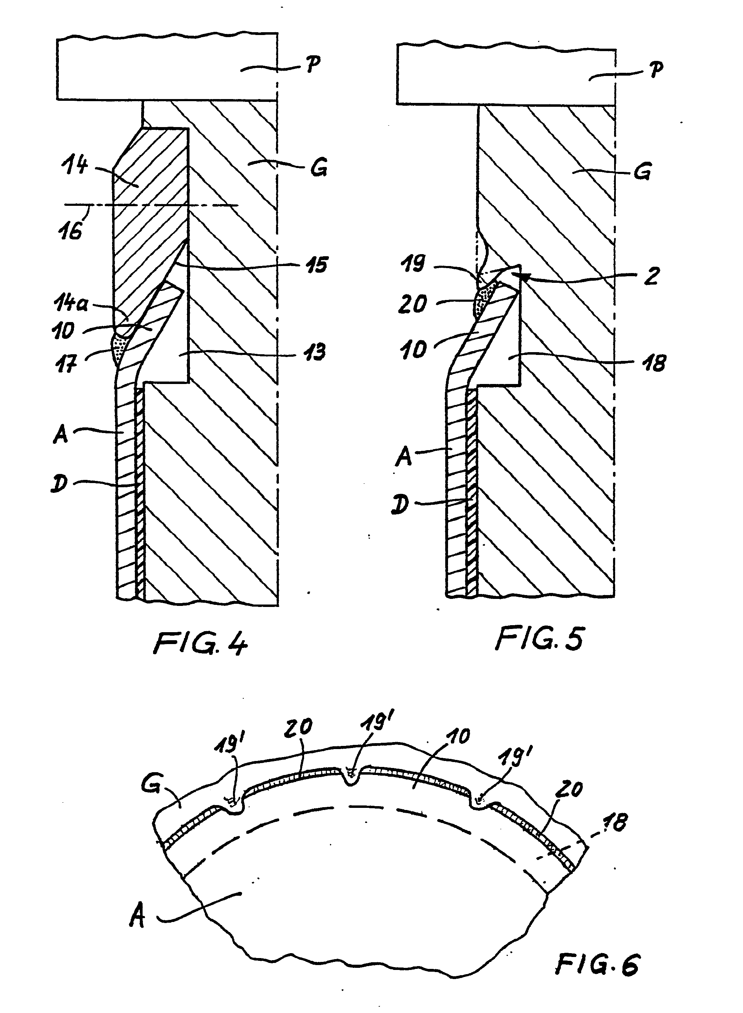

Die in Fig. 4 gezeigte Ausführung enthält als Halteelement einen in einer Nut 13 von entsprechender Größe festgelegten Einsatz 14, der eine den Randbereich 10 der Abdeckung A übergreifende Partie 14a aufweist. Diese ist bei der dargestellten vorteilhaften Ausbildung mit einer im wesentlichen parallel zum Randbereich 10 verlaufenden geneigten Fläche 15 versehen, so daß insgesamt eine hinterschnittene Form gebildet wird. Der Einsatz 14 ist ein ein- oder mehrteiliger Ring, der in der Nut 13 auf geeignete Weise befestigt ist, z. B. durch Schrauben, wie schematisch bei der Ziffer 16 angedeutet ist. Der Einsatz 14 kann aus Stahl oder einem anderen Werkstoff bestehen, so auch aus Kunststoff. Am inneren Rand des ringförmigen Einsatzes 14 ist zusätzlich noch eine Dichtung 17 aus ringförmig aufgetragenem Material vorhanden, das von der weiter oben in Verbindung mit Fig. 3 schon erläuterten Art sein kann.

Bei der Ausführung nach Fig. 5 ist das Halteelement durch wenigstens einen verformten Bereich der radial äußeren Begrenzung einer Nut 18 gebildet. Die letztere hat im strichpunktiert dargestellten Ausgangszustand in ihrem radial außen gelegenen Teil ein hinterschnittenes Querschnittsprofil 2 ähnlich wie die in Fig. 1 gezeigte Nut. Sie kann aber auch einen rechteckigen Querschnitt haben. Nach dem Aufbringen der Abdeckung A mit ihrem in die Nut 18 eingreifenden Randbereich 10 wird die Kantenpartie 19 auf dem ganzen Umfang oder aber auch nur an einzelnen Stellen einwärts gedrückt, so daß die verformte Kantenpartie über den Randbereich 10 der Abdeckung A hinübergreift und dadurch diese sichert. Auch hier kann eine Dichtung 20 der erläuterten oder ähnlichen Art vorhanden sein. Das dazu weiter oben schon Gesagte gilt hier entsprechend. Die Verformung der Kantenpartie kann durch Einwalzen, Einrollen, durch Drücken, Treiben oder auf andere geeignete Weise erfolgen. Das Material der Dichtung 20 wird zweckmäßig vorher auf den Randbereich 10 aufgebracht.

Bei dieser wie auch bei allen anderen Ausführungen kann sich das Halteelement bzw. der ein solches verkörpernde Bereich eines Teiles über den ganzen Umfang der Nut bzw. des Randbereichs der Abdeckung erstrecken, oder es können mehrere mit Abstand voneinander über den Umfang der Nut verteilt angeordnete Halteelemente vorgesehen sein. In Fig. 6 ist dies für den Fall veranschaulicht, daß die Halteelemente durch einzelne verformte Stellen 19' des Grundkörpers am radial außen gelegenen Bereich der Nut 18 gebildet sind. An den in Umfangsrichtung dazwischenliegenden Partien ist der Zwischenraum zwischen dem Randbereich 10 der Abdeckung A und der Nutbegrenzung durch das Dichtungsmaterial 20 verschlossen. Handelt es sich um einzelne Halteelemente anderer Art, insbesondere um solche, die als Teile der in Verbindung mit den Fig. 2 bis 4 erläuterten ringförmigen Halteelemente aufgefaßt werden können, so ist die Anordnung und Ausbildung sinngemäß gleich der in Verbindung mit Fig. 6 erläuterten.

Bei einem sich über den ganzen Umfang erstreckenden Halteelement kann dieses selbst auch die Funktion einer Dichtung übernehmen, so daß eine zusätzliche Dichtung sich erübrigt.

## Patentansprüche

1. Scheibenförmiges, am Umfang mit definierten oder undefinierten Schneiden (P) versehenes Werkzeug, namentlich Kreissäge-Werkzeug, Trennschleifscheibe od. dgl., wobei der Grundkörper (G) oder das Stammblatt des Werkzeuges wenigstens auf einer Seite mit einer schwingungsmindernden Bekleidung (B) versehen ist, die eine Schicht (D) aus viskoelastischem Material und eine Abdeckung (A) auf dieser enthält, wobei für die Abdeckung wenigstens im Bereich ihres äußeren Umfangs eine außenseitige mechanische Halterung vorgesehen ist, der Grundkörper (G) wenigstens in einer Seitenfläche eine durchgehende Nut (1, 11, 13, 18) aufweist, und die Abdeckung (A) sich mit einem Teil ihres äußeren Bereichs (10) in die Nut (1, 11, 13, 18) hinein erstreckt, dadurch gekennzeichnet, daß wenigstens ein am Grundkörper (G) abgestütztes Halteelement (6, 8, 14, 19) den in die Nut (1, 11, 13, 18) reichenden Randbereich (10) der Abdeckung (A) übergreift.

2. Werkzeug nach Anspruch 1, dadurch gekennzeichnet, daß die Nut (1, 18) in ihrem radial außen gelegenen Teil ein hinterschnittenes Querschnittsprofil (2) aufweist.

3. Werkzeug nach Anspruch 2, dadurch gekennzeichnet, daß das Halteelement von dem das hinterschnittene Querschnittsprofil (2) aufweisenden Teil der Nut (1, 18) selbst gebildet ist.

4. Werkzeug nach Anspruch 2, dadurch gekennzeichnet, daß das Halteelement (6) zwischen einer geneigten Fläche (5) der Nut (1) und dem Randbereich (10) der Abdeckung (A) vorgesehen ist.

5. Werkzeug nach Anspruch 4, dadurch gekennzeichnet, daß das Halteelement (6) von einer Materialfüllung gebildet ist.

6. Werkzeug nach einem der Ansprüche 1 und 2, dadurch gekennzeichnet, daß das Halteelement ein am Grundkörper (G) festgelegter Materialstreifen (8) ist, der sich in radialer Richtung über einen Teil der Nut (11) erstreckt.

7. Werkzeug nach einem der Ansprüche 1 und 2, dadurch gekennzeichnet, daß das Halteelement ein in der Nut (13) festgelegter Einsatz (14) ist, der eine den Randbereich (10) der Abdeckung (A) übergreifende Partie (14a) aufweist.

8. Werkzeug nach Anspruch 7, dadurch gekennzeichnet, daß der Einsatz (14) in seinem dem Randbereich (10) der Abdeckung (A) zugewandten Teil eine hinterschnittene Form hat.

9. Werkzeug nach einem der Ansprüche 1 und 2, dadurch gekennzeichnet, daß das Halteelement (19, 19') durch wenigstens einen verformten Bereich der radial außen gelegenen Begrenzung der Nut (18) gebildet ist.

10. Werkzeug nach einem der Ansprüche 1 bis 9, dadurch gekennzeichnet, daß das Halteelement (6, 8, 14, 19) sich durchgehend über den ganzen Umfang der Nut (1, 11, 13, 18) erstreckt.

11. Werkzeug nach einem der Ansprüche 1 bis 9, dadurch gekennzeichnet, daß mehrere mit Abstand voneinander über den Umfang der Nut (1, 11, 13, 18) verteilt angeordnete Halteelemente (6, 8, 14, 19') vorgesehen sind.

12. Werkzeug nach einem der Ansprüche 1 bis 11, gekennzeichnet durch eine auf der Außenseite der Abdeckung (A) vorgesehene, sich zumindest über Teile des Umfangs der Nut (1, 11, 13, 18) erstreckende Dichtung (12, 17, 20).

## Claims

1. A disc-shaped tool, in particular a circular saw, parting-off grinding disc or the like, provided on its periphery with defined or undefined cutting edges (P), the base (G) or the main blade of the tool being provided at least on one side with a vibration-reducing coating (B) which comprises a layer (D) of visco-elastic material and a covering (A) thereon, an external mechanical holding means being provided for the covering at least in the region of the outer periphery thereof, the base (G) having a continuous groove (1, 11, 13, 18) at least in one lateral face and the covering (A) extending with part of its outer region (10) into the groove (1, 11, 13, 18), characterized in that at least one holding element (6, 8, 14, 19) supported on the base (G) engages over the edge region (10) of the covering (A) extending into the groove (1, 11, 13, 18).

2. A tool according to Claim 1, characterized in that in its radially outward part the groove (1, 18) has an undercut cross-sectional profile (2).

3. A tool according to Claim 2, characterized in that the holding element is formed by the part of the groove (1, 18) itself which comprises the undercut cross-sectional profile (2).

4. A tool according to Claim 2, characterized in that the holding element (6) is provided between an inclined surface (5) of the groove (1) and the edge region (10) of the covering (A).

5. A tool according to Claim 4, characterized in that the holding element (6) is formed by a filling of material.

6. A tool according to one of Claims 1 and 2, characterized in that the holding element is a strip of material (8) which is secured to the base (G) and which extends in a radial direction over part of the groove (11).

7. A tool according to one of Claims 1 and 2, characterized in that the holding element is an insert (14) which is secured in the groove (13) and which comprises a portion (14a) engaging over the edge region (10) of the covering (A).

8. A tool according to Claim 7, characterized in that the insert (14) has an undercut shape in its part facing the edge region (10) of the covering (A).

9. A tool according to one of Claims 1 and 2, characterized in that the holding element (19, 19') is formed by at least one shaped region of the radially outward boundary of the groove (18).

10. A tool according to any one of Claims 1 to 9, characterized in that the holding element (6, 8, 14, 19) extends continuously over the entire periphery of the groove (1, 11, 13, 18).

11. A tool according to any one of Claims 1 to 9, characterized in that a plurality of holding elements (6, 8, 14, 19') arranged distributed at a distance from one another over the periphery of the groove (1, 11, 13, 18) are provided.

12. A tool according to any one of Claims 1 to 11, characterized by a seal (12, 17, 20) provided on the outside of the covering (A) and extending at least over parts of the periphery of the groove (1, 11, 13, 18).

## Revendications

1. Outil en forme de disque, muni à sa périphérie de taillants (P) définis ou non définis, à savoir outil de scie circulaire, disque de tronçonnage ou analogue, dans lequel le corps de base (G) ou la plaquette principale de l'outil est muni sur au moins un côté d'un revêtement réduisant les vibrations (B) qui contient une couche (D) de matériau visco-élastique et un recouvrement (A) situé sur celle-ci, tandis qu'il est prévu, pour le recouvrement et au moins dans la zone de son contour extérieur, une fixation mécanique sur le côté externe, le corps de base (G) comportant, au moins dans une face latérale, une gorge continue (1, 11, 13, 18) et le revêtement (A) s'étendant dans cette gorge (1, 11, 13, 18) par une partie de sa zone externe (10), caractérisé en ce qu'au moins un élément de fixation (6, 8, 14, 19) prenant appui sur le corps de base (G) recouvre la zone marginale (10) du recouvrement (A) qui s'étend dans la gorge (1, 11, 13, 18).

2. Outil selon la revendication 1, caractérisé en ce que la gorge (1, 18) présente, dans sa partie située à l'extérieur dans le sens radial, un profil transversal en contre-dépouille (2).

3. Outil selon la revendication 2, caractérisé en ce que l'élément de maintien est constitué par la partie de la gorge (1, 18) présentant le profil transversal en contre-dépouille (2) elle-même.

4. Outil selon la revendication 2, caractérisé en ce que l'élément de maintien (6) est prévu entre une surface inclinée (5) de la gorge (1) et la zone marginale (10) du recouvrement (A).

5. Outil selon la revendication 4, caractérisé en ce que l'élément de maintien (6) est constitué par un remplissage de matériau.

6. Outil selon l'une des revendications 1 et 2, caractérisé en ce que l'élément de maintien est une bande de matériau (8) fixée sur le corps de base (G) et qui s'étend, suivant la direction radiale, par-dessus une partie de la gorge (11).

7. Outil selon l'une des revendications 1 et 2, caractérisé en ce que l'élément de maintien est une pièce rapportée (14) fixée dans la gorge (13) et qui présente une partie (14a) recouvrant la zone marginale (10) du recouvrement (A).

8. Outil selon la revendication 7, caractérisé en ce que la pièce rapportée (14) présente une forme en contre-dépouille dans sa partie tournée vers la zone marginale (10) du recouvrement (A).

9. Outil selon l'une des revendications 1 et 2, caractérisé en ce que l'élément de maintien (19, 19') est constitué par au moins une zone déformée de la périphérie de la gorge (18) qui est située radialement vers l'extérieur.

10. Outil selon l'une des revendications 1 à 9, caractérisé en ce que l'élément de maintien (6, 8, 14, 19) s'étend de manière continue sur toute la périphérie de la gorge (1, 11, 13, 18).

11. Outil selon l'une des revendications 1 à 9, caractérisé en ce qu'il est prévu plusieurs éléments de maintien (6, 8, 14, 19') répartis, à distance l'un de l'autre, sur la périphérie de la gorge (1, 11, 13, 18).

12. Outil selon l'une des revendications 1 à 11, caractérisé par une étanchéité (12, 17, 20) prévue sur la face extérieure du recouvrement (A) et s'étendant par-dessus des parties au moins de la périphérie de la gorge (1, 11, 13, 18).

FIG. 1

FIG. 2

FIG. 3

FIG. 4

FIG. 5

FIG. 6